(19) Europäisches Patentamt / European Patent Office / Office européen des brevets

(11) **EP 1 598 325 B1**

(12) **EUROPEAN PATENT SPECIFICATION**

(45) Date of publication and mention
of the grant of the patent:
**09.04.2014 Bulletin 2014/15**

(21) Application number: **03703365.1**

(22) Date of filing: **24.02.2003**

(51) Int Cl.:
***C04B 35/01*** *(2006.01)*     ***C04B 35/48*** *(2006.01)*
***C04B 35/50*** *(2006.01)*

(86) International application number:
**PCT/JP2003/002008**

(87) International publication number:
**WO 2004/074205 (02.09.2004 Gazette 2004/36)**

(54) **PROTON-CONDUCTIVE AND ELECTRON-CONDUCTIVE CERAMIC**

PROTONENLEITFÄHIGE UND ELEKTRONENLEITFÄHIGE KERAMIK

CERAMIQUE CONDUCTRICE DE PROTONS ET CONDUCTRICE D'ELECTRONS

(84) Designated Contracting States:
**DE FR GB**

(43) Date of publication of application:
**23.11.2005 Bulletin 2005/47**

(73) Proprietor: **TYK Corporation**
**Tokyo 100-0005 (JP)**

(72) Inventors:
 • **MATSUMOTO, Hiroshige**
 **Fukuoka-shi, Fukuoka-ken, 819-0001 (JP)**
 • **SHIMURA, Tetsuo**
 **Meitou-ku, Nagoya-shi, Aichi 465-0094 (JP)**
 • **YOGO, Toshinobu**
 **Tenpaku-ku, Nagoya-shi, Aichi 468-0011 (JP)**
 • **IWAHARA, Hiroyasu**
 **Moriyama-ku, Nagoya-shi, Aichi 463-0034 (JP)**

 • **KATAHIRA, Koji,**
 **c/o TYK CORPORATION**
 **Tajimi-shi,**
 **Gifu 507-8607 (JP)**

(74) Representative: **TBK et al**
 **Bavariaring 4-6**
 **80336 München (DE)**

(56) References cited:
| | |
|---|---|
| EP-A- 1 095 914 | EP-A1- 1 125 893 |
| EP-A1- 1 452 505 | EP-A2- 1 029 837 |
| EP-A2- 1 029 837 | DE-A1- 4 406 276 |
| JP-A- 6 305 816 | JP-A- 2000 302 550 |
| JP-B2- 63 053 135 | US-A- 6 037 514 |
| US-B1- 6 281 403 | |

## Description

TECHNICAL FIELD

The present invention relates to mixed proton-electron conducting ceramic which has proton and electron as conductive species simultaneously.

BACKGROUND ART

Conventionally, it has been known that ceramic having a certain perovskite structure exhibits considerable proton conductivity. Moreover, conventionally, a report has been made about the hydrogen permeability on ceramic having a chemical formula $BaCe_{0.95}Y_{0.05}O_{3-\alpha}$ in Patent Literature No. 1 (Solid State Ionics 100 (1997) 45-52).

In addition, conventionally, the development of technology for permeating hydrogen using palladium alloys, represented by palladium-silver systems, has been underway. And, a hydrogen production process using palladium or a palladium alloy-based proton conductive membrane has been reported in Patent Literature No. 2 (Japanese Unexamined Patent Publication (KOKAI) No. 10-297,902). Since palladium systems are extremely expensive, there are many limitations in view of cost. Reference is made to the following documents; EP 1 029 837 A2 (MATSUSHITA ELECTRIC IND CO LTD[JP]) 23 August 2000(2000-08-23), EP 1 095 914 A (NIPPON STEEL CORP[JP]) 2 May 2001(2001-05-02), DE 44 06 276 A1 (KYOCERA CORP[JP]) 22 September 1994(1994-09-22), JP 6 305816 A (KYOCERA CORP) 1 November 1994(1994-11-01), JP 2000 302550 A (MATSUSHITA ELECTRIC IND CO LTD) 31 October 2000(2000-10-31), US 6 037 514 A (WHITE JAMES H[US] ET AL) 14 March 2000(2000-03-14), US 6 281 403 B1 (WHITE JAMES H[US] ET AL) 28 August 2001(2001-08-28), EP 1 452 505 A1 (NIPPON STEEL CORP[JP]; TEIKOKU OIL[JP]) 1 September 2004(2004-09-01).

It is an assignment for the present invention to provide mixed proton-electron conducting ceramic which has both proton and electron as conductive species simultaneously by containing ruthenium (Ru) as a dopant.

DISCLOSURE OF THE INVENTION

The present inventors have been devoted themselves to proceeding with the development on mixed proton-electron conducting ceramic for many years. And, they came to know that it is possible to obtain mixed proton-electron conducting ceramic having both proton and electron as conductive species simultaneously in a case that it is a metallic oxide having a perovskite type structure expressed by a general formula $ABO_{3-\alpha}$; and it includes ruthenium (Ru) as a dopant, they confirmed it with tests, and they completed the present invention.

Specifically, mixed proton-electron conducting ceramic according to the present invention is a ceramic having the features defined in claim 1.

In accordance with the present invention, proton conductivity and electron conductivity are demonstrated while having proton and electron as conductive species simultaneously in a high-temperature region. This is confirmed by tests. As for the high-temperature region, it is possible to exemplify 400-700 °C approximately in general, especially, 700-1,200 °C.

BRIEF DESCRIPTION OF THE DRAWINGS

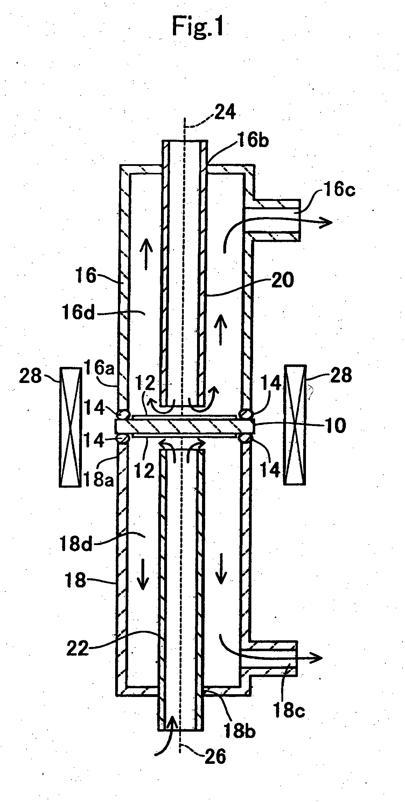

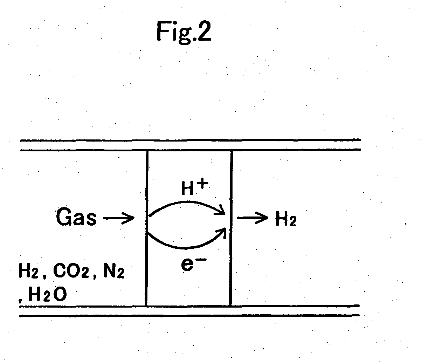

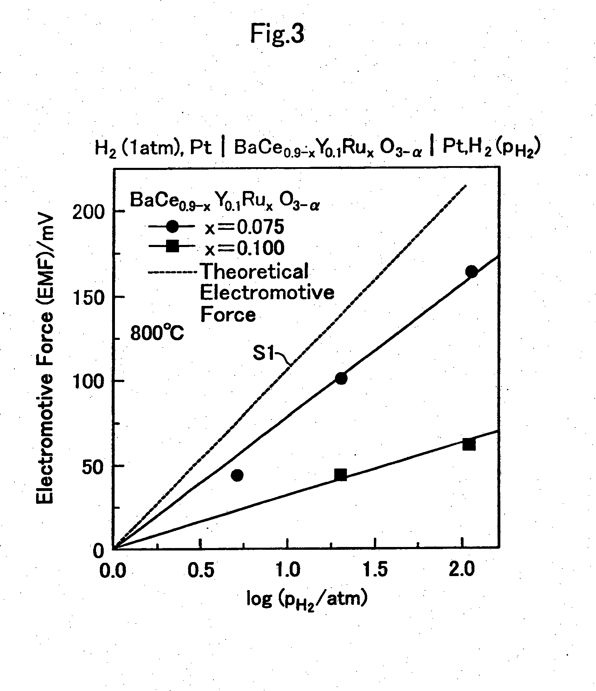

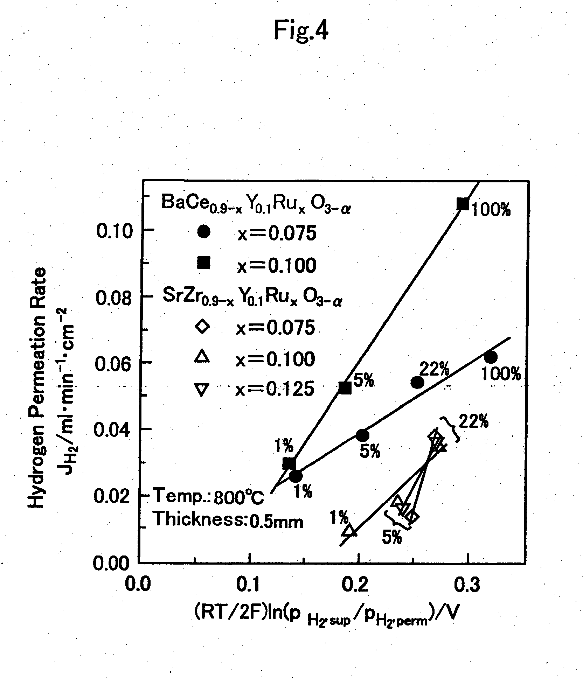

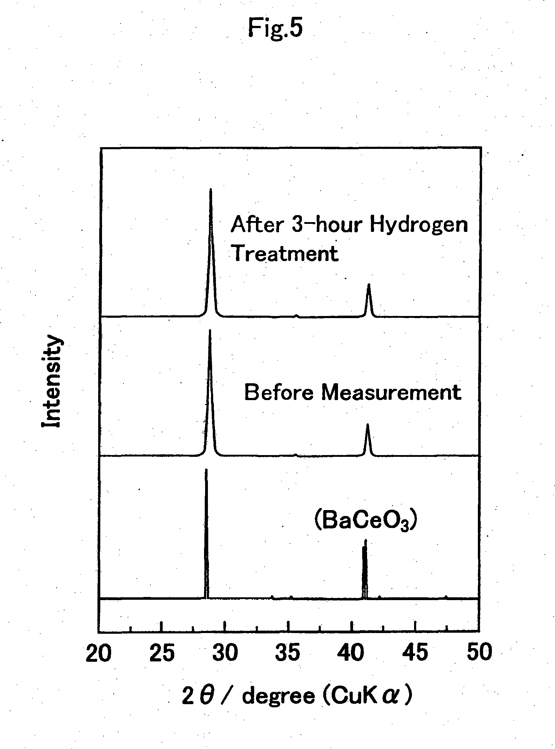

Fig. 1 is a conceptual diagram of a testing apparatus used in examples. Fig. 2 is a conceptual diagram having proton conductivity and electron conductivity. Fig. 3 is a graph for illustrating the results of electromotive forces of a hydrogen concentration cell. Fig. 4 is a graph for illustrating relationships between electromotive force and hydrogen permeation rate. Fig. 5 is a graph for illustrating X-ray diffraction on a sample.

(1) A mixed proton-electron conducting ceramic according to the present invention is a metallic oxide having a perovskite type structure expressed by a general formula $ABO_{3-\alpha}$, and is one which includes ruthenium (Ru) and optionally at least one member selected from the group consisting of chromium (Cr), manganese (Mn), iron (Fe), cobalt (Co) and nickel (Ni) in a proportion of 0.8 or less by molar ratio when a sum of a molar ratio of the A-site element and a molar ratio of the B-site element is taken as 2, which includes ruthenium (Ru) in a proportion of 0.01 or more by molar ratio, and which has proton conductivity and electron conductivity.

Ruthenium (Ru) (hereinafter might be referred to as a dopant element according to the present invention) is included in a range of from 0.01 or more to 0.8 or less by molar ratio.

When a molar ratio of the dopant element according to the present invention is too less, it is less likely to obtain electron conductivity in addition to objective proton conductivity. When a molar ratio of the dopant element is too much, the other elements decrease relatively so that not only it is less likely to obtain objective proton conductivity and electron conductivity but also sinterability might degrade further or chemical stability and mechanical strength tends to degrade depending on service conditions.

That is, since electron conductivity is believed to depend on the amount of transition metal, electron conductivity is not demonstrated when the dopant amount is less. Note that it is preferable to adjust an amount of the dopant element according to the present invention depending on service temperatures, costs, usage, and the like, as well.

Taking the aforementioned actual situations into consideration, ruthenium (Ru) as for the dopant element according to the present invention, it is possible to exemplify 0.01 or more, 0.015 or more, or 0.02 or more, by molar ratio, on the lower-limit side, further, it is possible to exemplify 0.025 or more, or 0.03 or more. Moreover, ruthenium (Ru) as for the dopant element according to the present invention, it is possible to exemplify 0.7 or less, 0.6 or less, or 0.5 or less, by molar ratio, on the upper-limit side combinable with the aforementioned lower limits, further, it is possible to exemplify 0.47 or less, 0.45 or less, or 0.43 or less, furthermore, it is possible to exemplify 0.4 or less, 0.35 or less, or 0.3 or less.

When the dopant element is ruthenium whose price is high, it is possible to exemplify 0.5 or less by molar ratio, considering industrial availableness in which cost is imperative.

(2) A perovskite type structure is expressed by a general formula $ABO_3$. Ruthenium (Ru) is a transition metal, and it can mainly function as a dopant to the B-site. By means of this, it is possible to let it give electron conductivity in addition to proton conductivity.

In accordance with the mixed proton-electron conducting ceramic according to the present invention, both proton conductivity and electron conductivity being obtainable in a high-temperature region means that said ceramic has hydrogen permeability, as described later.

In accordance with a perovskite type structure, even when the oxygen is deficient considerably, the perovskite type structure is kept stably. Specifically, even when oxygen changes considerably, like deficiency and so on, in the general formula $ABO_3$, the perovskite type structure is kept stably. The oxygen deficiency is expressed by $\alpha$, and is a value which changes depending on the A-site element and the B-site element (including an element of B' and an element of B" described later) as well as constituent elements, the service temperatures and the oxygen partial pressure in atmosphere. Therefore, as for the oxygen deficiency $\alpha$, it is possible to exemplify a range of -0.7 or more and +0.7 or less, by molar ratio, in general, or a range of -0.5 or more and +0.5 or less. Therefore, as for oxygen (O), it is possible to exemplify a range of 2.3 or more and 3.7 or less, or a range of 2.5 or more and 3.5 or less, by molar ratio. However, it shall not be limited to this. Therefore, the mixed proton-electron conducting ceramic can be metallic oxidation ceramic having a perovskite type structure expressed by a general formula $ABO_{3-\alpha}$.

Here, in accordance with the mixed proton-electron conducting ceramic according to the present invention, it is possible to include ruthenium (Ru) (a dopant element according to the present invention). As for ruthenium (Ru) (a dopant element according to the present invention), it is possible to exemplify 0.01 or more, 0.015 or more, or 0.02 or more, by molar ratio, further, it is possible to exemplify 0.025 or more, or 0.03 or more. Moreover, as for a dopant element according to the present invention, that is, ruthenium (Ru), it is possible to exemplify 0.7 or less, 0.6 or less, or 0.5 or less, by molar ratio, further, it is possible to exemplify 0.47 or less, or 0.45 or less, or 0.43 or less furthermore, it is possible to exemplify 0.4 or less, 0.35 or less, or 0.3 or less.

The sum of the A-site molar ratio and the B-site molar ratio is considered a datum, because the fact that, even if the proportion of the A-site molar ratio to the B-site molar ratio is changed more or less, when the sum is 2, both proton conductivity and electron conductivity are obtainable is taken into account. As for the value of (A-site molar ratio/B-site molar ratio), it can be within a range of 0.8-1.2. Alternatively, it can be within a range of 0.9-1.1, or within a range of 0.95-1.05.

(3) Further, in accordance with the mixed proton-electron conducting ceramic according to the present invention, it is possible to employ a mode which includes zirconium (Zr) in a proportion of 0.005 or more, or 0.01 or more, by molar ratio, when a sum of molar ratios of metals constituting the metallic oxide is taken as 2, that is, when a sum of the A-site molar ratio and the B-site molar ratio is taken as 2. Zirconium can function as the B-site element, and the zirconium content shall not surpass the B-site molar ratio. Zirconium is such that the mechanical strength improvement and chemical stability improvement of ceramic can be expected. However, when zirconium is in excess, there is a tendency that the hydrogen permeation rate decreases. Accordingly, when zirconium is included, a molar ratio of zirconium can be a proportion of 0.01 or more and 0.99 or less.

Here, although it depends on required mechanical strength, chemical stability, usage, service temperatures, and the like, as for a lower-limit-side molar ratio of zirconium, it is possible to exemplify 0.012 or more, 0.015 or more, 0.02 or more, 0.025 or more, 0.03 or more, or 0.04 or more, according to needs. Moreover, as for an upper-limit-side molar ratio of zirconium combinable with the aforementioned lower limits, it is possible to exemplify 0.99 or less, 0.97 or less, 0.95 or less, 0.90 or less, 0.85 or less, 0.80 or less, or 0.7 or less, according to needs.

(4) High-temperature type proton conducting ceramic can be generally expressed with a composition of a chemical formula $A_{1+a}B_{1-a-b}B'_bO_{3-\alpha}$. On the other hand, the mixed proton-electron conducting ceramic according to the present invention can be expressed with a composition of a chemical formula $A_{1+a}B_{1-a-b-c}B'_bB''_cO_{3-\alpha}$. The B-site element includes a B element in the aforementioned chemical formula, and additionally includes a B' element and a B" element.

Here, it can be set up as follows.

A can be at least one member selected from the group consisting of calcium (Ca), strontium (Sr) and barium (Ba). A satisfies a condition, $0.8 \leq (1+a)/(1-a) \leq 1.2$.

B can be at least one member selected from the group consisting of cerium (Ce), zirconium (Zr) and titanium (Ti). Here, when a molar-ratio sum of B, B' and B" is taken as 1, it is possible to include zirconium (Zr), which is turned into the B site, by 0.005 or more, or 0.01 or more.

B' can be at least one member selected from the group consisting of aluminum (A1), scandium (Sc), gallium (Ga), yttrium (Y), indium (In) and an element which belongs to the lanthanide series and whose atomic number is 59-71. As for a lanthanide-series element, it is possible to exemplify at least one member selected from the group consisting of praseodymium (Pr) with atomic number 59, neodymium (Nd) with atomic number 60, gadolinium (Gd) with atomic number 64, ytterbium (Yb) with atomic number 70, samarium (Sm) with atomic number 62, europium (Eu) with atomic number 63 and terbium (Tb) with atomic number 65. The B' element is one for mainly letting proton exist in said ceramic. The B' element mainly accomplishes a role of making an oxygen vacancy (a site in which no oxygen exists, though oxygen should be present) in crystal lattices. A range of b can be 0 or more and 0.5 or less. Note that, as for the lower limit of b, a molar ratio of the B' element, it is possible to exemplify 0.01, 0.05, 0.1, or 0.2, according to needs. As for the upper limit of b, it is possible to exemplify 0.48, 0.45, 0.4, 0.3, or 0.2, according to needs.

B" can be ruthenium (Ru). The B" element is mainly effective for giving electron conductivity in addition to proton conductivity, and accordingly it is possible to demonstrate hydrogen permeability. A range of c, a molar ratio of the B" element, can be 0.01 or more and 0.8 or less. Note that, as for the lower limit of c, it is possible to select it appropriately, and it is possible to exemplify 0.015, 0.02, or 0.05, according to needs. As for the upper limit of c, it is possible to select it appropriately, and it is possible to exemplify 0.7, 0.6, or 0.5, according to needs, further it is possible to exemplify 0.48, 0.45, 0.4, 0.3, or 0.2, according to needs.

(5) The mixed proton-electron conducting ceramic according to the present invention is a metallic oxide having a perovskite type structure. As a representative one, it is possible to name a barium (Ba)-cerium (Ce)-yttrium (Y)-ruthenium (Ru)-oxygen (O)-based metallic oxide. As for this metallic oxide, it is possible to name ceramic in which a BaCeO3 system is doped with yttrium and ruthenium ($BaCe_{0.9-x}Y_{0.1}Ru_xO_{3-\alpha}$ system, X = 0.05-0.8, or X = 0.05-0.5), for example.

Moreover, it is possible to name a strontium (Sr) - zirconium (Zr)-yttrium (Y)-ruthenium (Ru)-oxygen (O)-based metallic oxide. As for this metallic oxide, it is possible to name ceramic in which an $SrZrO_3$ system is doped with yttrium and ruthenium ($SrZr_{0.9-x}Y_{0.1}Ru_xO_{3-\alpha}$ system, X = 0.05-0.8, or X = 0.05-0.5), for example.

Moreover, it is possible to name a strontium (Sr)-cerium (Ce)-ruthenium (Ru)-oxygen (O)-based metallic oxide. As for this metallic oxide, it is possible to name ceramic in which an $SrCeO_3$ system is doped with ruthenium ($SrCe_{0.9-x}Ru_xO_{3-\alpha}$ system, X = 0.05-0.8, or X = 0.05-0.5), for example.

(6) In accordance with the mixed proton-electron conducting ceramic according to the present invention, it is possible to exemplify a mode in which a catalytic metal layer is laminated on at least one of its front surface and rear surface. By the catalytic metal layer, it is possible to facilitate the activities of the following reactions, and it is possible to expect the improvement of proton conductivity and electron conductivity. $H_2 \rightarrow 2H^+ + 2e^-$ (anode side), and $2H^+ + 2e^- \rightarrow H_2$ (cathode side).

Therefore, as for the catalytic metal layer, it can be disposed on either one of the anode side and cathode side, or on both of them. As for the catalytic metal layer, it can include at least one member selected from the group consisting of platinum, palladium, rhodium, silver and gold.

(7) Moreover, in accordance with the mixed proton-electron conducting ceramic according to the present invention, it is possible to exemplify a mode in which an electrode layer for applying voltage is laminated on at least one of its front surface and rear surface. When applying voltage, it is possible to expect the reaction-activity facilitation in the electrode layer. As for the electrode layer, it can be shared with the catalytic metal layer, and can include at least one member selected from the group consisting of platinum, palladium, rhodium, silver and gold.

(8) In accordance with the mixed proton-electron conducting ceramic according to the present invention, its thickness is not limited in particular, but can be selected appropriately, like thin films, thick films, thick layers, and the like. As for a thickness of the mixed proton-electron conducting ceramic according to the present invention, it depends on the composition, whether said ceramic is used independently, or whether said ceramic is turned into a thin-film shape and is then held on a support having gas permeability in a thin-film shape. Regarding the thickness, it is possible to exemplify 0.1 $\mu$m, 0.5 $\mu$m, or 1 $\mu$m, as the lower limit, in general, as for the upper limit, it is possible to exemplify 10 mm, 20 mm, 40 mm, or the like. For instance, it is possible to exemplify 1-500 $\mu$m, 5-200 $\mu$m, or 10-100 $\mu$m. However, it is not limited to these at all.

(9) As for a production process for the mixed proton-electron conducting ceramic according to the present invention, it is possible to employ proper methods depending on its thickness, and the like. When being a thick film, it is possible to employ a method in which a green compact, made by pressurizing a raw material powder, is sintered to form it, for example. When being a thin film, it is possible to employ a method in which a solution with a raw material powder dispersed in a dispersion medium is coated as a film on a substrate and is then calcined. Alternatively, it is possible to employ a physical vapor deposition method (PVD), such as vacuum deposition, ion plating and sputtering. Alternatively, it is possible to employ a chemical vapor deposition (CVD) method in which a raw material gas is led onto a heated substrate, and is reacted to form a coated film. In certain cases, it is possible to employ a plasma thermal spraying method in which a raw material powder is melted instantaneously, using a thermal source by means of plasma, and is sprayed onto a substrate to form a coated film.

(EXAMPLES)

Hereinafter, examples of the present invention will be described in detail.

(Example No. 1)

The present example is directed to a barium-cerium-yttrium-ruthenium-oxygen-based metallic oxide. That is, it is directed to mixed proton-electron conducting ceramic expressed by a chemical formula, $BaCe_{0.9-x}Y_{0.1}R_xO_{3-\alpha}$.

In accordance with this ceramic, let a chemical formula be $A_{1+a}B_{1-a-b-c}B'_bB''_cO_{3-\alpha}$, the A element is barium (Ba), and a = 0. The B element is cerium (Ce). The B' element is yttrium (Y), and the molar ratio b of the B' element is 0.1. Moreover, the B" element is ruthenium (Ru), and the molar ratio c of the B" element is X (X = c). Ruthenium is a transition metal which undergoes valence change with ease.

B' and B" are those which substitute for the B-site element partially. As for the molar ratio of the oxygen deficient amount $\alpha$, it falls in a range of -0.5 or more and +0.5 or less, in general, however, it is not limited to this at all.

In accordance with the present example, when a sum of the A-site molar ratio and the B-site molar ratio is taken as 2, as for X (X = c), the molar ratio of ruthenium being the B" element, it is adapted to X = 0.075, or X = 0.100.

When X = 0.075, it is mixed proton-electron conducting ceramic expressed by a chemical formula, $BaCe_{0.825}Y_{0.1}R_{0.075}O_{3-\alpha}$. In this instance, when a sum of the molar ratios of the metals constituting the ceramic is taken as 2, that is, when a sum of the molar ratio of the A-site element and the molar ratio of the B-site element (including B' and B") is taken as 2, X (X = c), the molar ratio of ruthenium being the B" element, is 0.075.

When X = 0.100, it is mixed proton-electron conducting ceramic expressed by a chemical formula, $BaCe_{0.8}Y_{0.1}R_{0.1}O_{3-\alpha}$. In this instance, when a sum of the molar ratios of the metals constituting the ceramic is taken as 2, X (X = c), the molar ratio of ruthenium being the B" element, is 0.100.

In accordance with the present example, the following respective powders, barium carbonate ($BaCO_3$, 99.99% purity), cerium oxide ($CeO_3$, 99.9% purity), yttrium oxide ($Y_2O_3$, 99.9% purity) and ruthenium oxide (99.9% purity), were used, as starting raw material powders. These starting raw material powders were weighed in predetermined proportions. The weighed starting raw materials were wet mixed in a mortar made of agate using ethanol, thereby forming a mixture powder. Thereafter, the ethanol was evaporated off from the mixture powder. The mixture powder was formed with a forming die (metallic die) by pressurizing, thereby forming a formed body. The formed body was calcined at 1,400 °C in air for 10 hours. Thereafter, the calcined formed body was pulverized in a mortar made of agate. Further, using ethanol as a dispersant, it was pulverized with a planetary ball mill made of zirconia (165 rpm) for 1-2 hours, thereby forming a powder. Thereafter, ethanol was evaporated by an infrared ray lamp in a draft, and the powder was dried in a 125 °C vacuum drying machine for a day or more. The thus obtained powder was formed with another forming die (metallic die), thereby obtaining a disk-shaped green compact. Further, the compact was pressurized by a rubber pressing method with a hydrostatic pressure (pressurizing force: 300 MPa), thereby forming a pressurized body. The pressurized body was sintered by heating it to and held it at 1,650 °C in an air atmosphere for 10 hours. Thus, a sample was formed.

Using an X-ray diffractometer, the identification of the sample's phases was carried out. Further, with an electron microscope (SEM, magnification: 400 times, and 1,000 times), the surface observation was carried out. It was confirmed with the SEM as well that the sample does not have any open pores. Open pores cause mechanical gas permeation. Since this sample does not have any open pores, no mechanical gas permeation occurs.

Further, in order to evaluate the proton conductivity, an electromotive force of a hydrogen concentration cell was measured, using an apparatus shown in Fig. 1. In this instance, a disk-pelletized sample 10 whose diameter was about 13 mm and thickness was 0. 5 mm was used. A platinum paste was coated onto both opposite end surfaces of the sample 10, and was baked at 900 °C for 1 hour, and accordingly porous platinum layers 12 (porous catalytic metal layers) were formed on both opposite end surfaces of the sample 10.

Furthermore, after covering the platinum layers 12 with platinum collectors, the sample 10 was held between an axial end 16a of a first ceramic pipe (alumina) 16 and an axial end 18a of a second ceramic pipe 18 (alumina) by way of ringshaped seals 14 made of glass, as shown in Fig. 1. Thus, a first chamber 16d and a second chamber 18d whose partition wall was the sample 10 were formed. The first ceramic pipe 16 has a first gas inlet port 16b, a first gas outlet port 16c, and the first chamber 16d. A first gas supply pipe (alumina) 20 is placed in the first gas inlet port 16b. The second ceramic pipe 18 has a second gas inlet port 18b, a second gas outlet port 18c, and the second chamber 18d. A second gas supply pipe (alumina) 22 is placed in the second gas inlet port 18b. A heating unit 28 is disposed around the sample 10.

And, a leakage test (temperature: 800 °C) for confirming that the sample 10 does not have mechanical gas permeability in the thickness-wise direction was carried out. In the leakage test, argon was introduced into the second chamber 18d as a carrier gas, and simultaneously helium (pressure: 1 atm, 1 atm ≒ 1,013 hPa) was introduced into the first chamber 16d, and outlet gases, which were discharged through the second gas outlet port 18c connected with the argon-side second chamber 18d, were checked by gas chromatography, thereby confirming that helium did not leak into said outlet gases. Thus, it was reconfirmed that the sample 10 did not have mechanical gas permeability.

In order to examine the proton conductivity, a test was carried out in which an electromotive force was measured with the hydrogen concentration cell. In this instance, it was carried out by introducing gases whose hydrogen partial pressures differ into each of the first chamber 16d and the second chamber 18d. Since the following reactions occur on the first-chamber-16d-side anode and second-chamber-18d-side cathode, electromotive forces meeting the hydrogen partial pressures generate. The theoretical electromotive force is found based on the Nernst equation set forth in equation 1 below. The anode is defined as a part that carries out an oxidation reaction. The cathode is defined as a part that carries out a reduction reaction.

Anode      $H_2 \rightarrow 2H^+ + 2e^-$
Cathode      $2H^+ + 2e^- \rightarrow H_2$

$$\text{Theoretical Electromotive Force } E_0 = (RT/2F) \times \ln[P_{H2}(\text{anode}) / P_{H2}(\text{cathode}) \quad \ldots\ldots \quad (1)$$

As is generally known, R represents the gas constant. T represents a temperature (K). F represents the Faraday constant. $P_{H2}$(anode) represents an anode-side (first chamber 16d) hydrogen partial pressure. $P_{H2}$(cathode) represents a cathode-side (second chamber 18d) hydrogen partial pressure.

When measuring the electromotive force, the pellet-shaped sample 10 (0.5 mm thickness and 13 mm diameter) was used, and simultaneously lead wires 24, 26 were electrically connected with the front and rear platinum layers 12 of the sample 10. Further, 1-atm hydrogen gas was introduced into the first chamber 16d side, the anode side, as a reference gas for the hydrogen concentration cell. A mixture gas, in which an argon gas and hydrogen were mixed in a predetermined ratio using a gas mixer, was introduced into the second chamber 18d, the cathode side. And, the hydrogen partial pressure in the cathode-side second chamber 18d was measured by gas chromatography. Regarding the generated electromotive force, an electromotive force was measured with an electrometer after confirming that the electromotive force became stabilized.

Here, Fig. 2 illustrates a concept that an electrolyte has electron conductivity in addition to having proton conductivity. As shown in Fig. 2, if an electrolyte, a sample, has electron conductivity in addition to having proton conductivity, when hydrogen is supplied onto an end surface of the electrolyte, a sample, the reaction, $H_2 \rightarrow 2H^+ + 2e^-$, occurs on the anode side in the end surface of the electrolyte. The protons ($H^+$) and electrons ($e^-$) permeate through the electrolyte. In the opposite-side end surface of the electrolyte, the reaction, $2H^+ + 2e^- \rightarrow H_2$, occurs on the cathode side, as a result, the hydrogen permeates. Here, when the electrolyte, a sample, has electron conductivity in addition to having proton conductivity, the generated electromotive force becomes smaller than the theoretical-electromotive-force value based on the aforementioned Nernst equation.

Fig. 3 illustrates the measurement results on the electromotive force of the hydrogen concentration cell (sample temperature: 800 °C). The horizontal axis of Fig. 3 represents the logarithm of the cathode-side hydrogen partial pressure. The vertical axis of Fig. 3 represents the electromotive force. In Fig. 3, the characteristic line S1 represents the theoretical electromotive force calculated by the Nernst equation based on the hydrogen pressure difference in between the anode side and the cathode side.

In the mixed proton-electron conducting ceramic expressed by the chemical formula, $BaCe_{0.9-x}Y_{0.1}Ru_xO_{3-\alpha}$, the ● marks of Fig. 3 represent the measurement results on X = 0.075, and the ■ marks of Fig. 3 represent the measurement results on X = 0.100. When X = 0.100, the mixed proton-electron conducting ceramic is expressed by a chemical formula, $BaCe_{0.8}Y_{0.1}Ru_{0.1}O_{3-\alpha}$. When X = 0.075, the mixed proton-electron conducting ceramic is expressed by a chemical formula, $BaCe_{0.825}Y_{0.1}Ru_{0.075}O_{3-\alpha}$.

Here, when an electrolyte has proton alone as the conductive species, the electromotive force of the hydrogen concentration cell follows the theoretical electromotive force based on the Nernst equation. However, when an electrolyte has both proton and electron (or electron hole) as the conductive species, the electromotive force of the hydrogen concentration cell should be lower than the theoretical electromotive force based on the Nernst equation.

As shown in Fig. 3, both measurement results on X = 0.075 and measurement results on X = 0.100 are such that linearity was appreciated. Further, both measurement results on X = 0.075 and measurement results on X = 0.100 are lower than the theoretical-electromotive-force value (characteristic line S1) based on the Nernst equation. Therefore, the sample according to the present examples has both proton conductivity and electron conductivity.

Further, regarding the aforementioned sample, a hydrogen permeation test was carried out. In this instance, no voltage was applied to the platinum layers 12. And, predetermined-partial-pressure hydrogen gases (pressures: 1 atm, 0.22 atm, 0.05 atm, and 0.01 atm) were introduced into the first chamber 16d, a hydrogen supply side (anode side), through the first gas supply pipe 20. The hydrogen gases supplied to the hydrogen supply side (anode side) are those in which water vapor was contained through a bubbler. The water vapor was contained in order to prevent the sample from being exposed to an excessive reducing atmosphere. Moreover, argon containing water vapor was introduced into the second chamber 18d, a hydrogen-permeation side (cathode side), through the second gas supply pipe 22. And, an amount of hydrogen discharged from the second gas outlet port 18c of the second chamber 18d was measured. Here, by conversion to 25 °C, a hydrogen permeation rate per unit time unit area was found based on equation (2).

$$V = Vg \cdot (c/100) \cdot \{(273.15 + 25)/(273.15 + T)\} \cdot (1/S)$$
$$(ml \cdot min^{-1} \cdot cm^{-2}) \ ...(2)$$

wherein Vg represents a flow volume ($ml \cdot min^{-1}$) of an outlet gas (carrier gas + generated hydrogen amount), T represents room temperature (°C), c represents a hydrogen concentration (%), and S represents a hydrogen permeation area of a sample, that is, a projected area of the front-side platinum layer 12 and an area in which a hydrogen gas contacts with one of the opposite sides of the sample.

As for the hydrogen concentration of the hydrogen gas introducing into the hydrogen supply side, it was set at 1% (0.01 atm), 5% (0.05 atm), 22% (0.22 atm), and 100% (1 atm). Here, when a sample has electron conductivity in addition to having proton conductivity, since self-short-circuiting current flows even without applying a voltage to the platinum layers 12 of the sample from the outside, the electrochemical permeation of hydrogen occurs in the sample.

Fig. 4 illustrates the measurement results. The horizontal axis of Fig. 4 represents being equivalent to the electromotive force based on the Nernst equation. The vertical axis of Fig. 4 represents the hydrogen permeation rate per unit time·unit area. The ● marks represent the measurement results on X = 0.075. The ■ marks represent the measurement results on X = 0.100. Around the respective marks, the hydrogen concentrations of hydrogen gas introduced into the hydrogen supply side are specified.

As shown in Fig. 4, when the 100% hydrogen gas was supplied to the anode side, the hydrogen permeation rate was 0.02 $ml \cdot min^{-1} \cdot cm^{-2}$ or more.

Specifically, as shown in Fig. 4, when X = 0.100, the hydrogen permeation rate was about 0.11 $ml \cdot min^{-1} \cdot cm^{-2}$ upon supplying the 100% hydrogen gas (= 1 atm) to the anode side. When this is referred to as a current density, it is equivalent to about 15 $mA/cm^2$. Moreover, upon supplying the 5% hydrogen gas (hydrogen partial pressure = 0.05 atm) to the anode side, the hydrogen permeation rate was about 0.05 $ml \cdot min^{-1} \cdot cm^{-2}$, moreover, upon supplying the 1% hydrogen gas (hydrogen partial pressure = 0.01 atm) to the anode side, the hydrogen permeation rate was about 0.03 $ml \cdot min^{-1} \cdot cm^{-2}$.

Moreover, when X = 0.075, the hydrogen permeation rate was about 0.06 $ml \cdot min^{-1} \cdot cm^{-2}$ upon supplying the 100% hydrogen gas (hydrogen partial pressure = 1 atm) to the anode side, moreover, upon supplying the 5% hydrogen gas (hydrogen partial pressure = 0.05 atm) to the anode side, the hydrogen permeation rate was about 0.03-0.04

ml·min$^{-1}$·cm$^{-2}$, moreover, upon supplying the 1% hydrogen gas (hydrogen partial pressure = 0.01 atm) to the anode side, the hydrogen permeation rate was about 0.025 ml·min$^{-1}$·cm$^{-2}$.

Taking the sample's thickness being thick considerably as 0.5 mm and the conversion per unit area into consideration, it is possible to say that they are remarkably large as the hydrogen permeation rate. Therefore, it is possible to expect substantial hydrogen permeation amount by intending to thin out ceramic and increasing the hydrogen permeation area.

The respective characteristic lines shown in Fig. 4 have linearity, it is understood that the measurement plotted points are on straight lines. The plotted points being on the straight lines mean a hydrogen permeation phenomenon based on electrochemical permeation, that is, mixed proton-electron conductivity, not gas permeation (gas leakage) from the open pores of the sample.

If open pores are formed in a sample, open pores which communicate in the thickness-wise direction thereof, and assume that the aforementioned hydrogen permeability results from mechanical hydrogen permeation by the pores, the hydrogen permeation rate should fundamentally be in proportion to the hydrogen partial pressure supplied to the anode side (when the hydrogen permeation amount is small). In this instance, the hydrogen permeation rate when the hydrogen concentration of hydrogen gas supplied to the anode side is 1% (hydrogen partial pressure = 0.01 atm) should be 1/100 of the case where the hydrogen gas whose hydrogen concentration is 100% is used, it should degrade greatly.

However, in accordance with the present example, the hydrogen permeation rate when the hydrogen concentration of gas supplied to the anode side was at 1% was 1/3 approximately with respect to the hydrogen permeation rate in the case where the hydrogen gas whose hydrogen concentration was at 100% was used, as shown in the measurement results illustrated in Fig. 4. Therefore, the hydrogen permeation rate according to the present example results from electrochemical hydrogen permeation, not mechanical gas permeation based on the open pores of the sample. Note that it is confirmed by SEM observation that no open pores communicating in the thickness-wise direction of the sample are formed, as described above.

Moreover, regarding the aforementioned ceramic, the electric conductivity $\sigma$ was measured by an alternate-current two-terminal method. The measurement temperature was set at 800 °C, and it was measured in a hydrogen gas humidified by 17.0 °C saturated water vapor. Regarding $BaCe_{0.825}Y_{0.1}Ru_{0.075}O_{3-\alpha}$, it exhibited an electric conductivity $\sigma$ = 1.7 x 10$^{-3}$ S·cm$^{-1}$. Regarding $SrZr_{0.825}Y_{0.1}Ru_{0.075}O_{3-\alpha}$, it exhibited an electric conductivity $\sigma$ = 2.2 x 10$^{-3}$ S·cm$^{-1}$.

As aforementioned, in accordance with Example No. 1, it was possible to provide mixed proton-electron conducting ceramic which has both proton conductivity and electron conductivity, and which can permeate hydrogen.

Further, the stability of the mixed proton-electron conducting ceramic according to the present invention was examined. In this instance, the sample according to X = 0.100, that is, the ceramic expressed by the chemical formula, $BaCe_{0.8}Y_{0.1}Ru_{0.1}O_{3-\alpha}$, was taken as a representative example. And, a sample formed of this ceramic was undergone exposure at a high temperature (800 °C) in a hydrogen atmosphere for 3 hours. In this instance, X-ray diffraction patterns of the sample before and after exposing it to the hydrogen atmosphere (reducing atmosphere) were measured. Fig. 5 illustrates the measurement results. As shown in Fig. 5, even when the sample was exposed to the aforementioned hydrogen atmosphere, no change was appreciated in the diffraction patterns, and this indicates that the sample according to the present example is stable in the high-temperature hydrogen atmosphere. For reference, an X-ray diffraction pattern regarding $BaCeO_3$ is illustrated in Fig. 5.

(Example No. 2)

As Example No. 2, a sample, which was formed of a strontium-zirconium-yttrium-ruthenium, was produced. That is, an $SrZr_{0.9-x}Y_{0.1}R_xO_{3-\alpha}$ sample was produced. In this instance, let X = 0.075, X = 0.100, and X = 0.125. In accordance with this ceramic, let a chemical formula be $A_{1+a}B_{1-a-b-c}B'_bB''_cO_{3-\alpha}$, a = 0, and the B element is zirconium (Zr). The B' element is yttrium (Y), and the molar ratio b of the B' element is 0.1. Moreover, the B" element is ruthenium (Ru), and the molar ratio c of the B" element is X (X = 0.075, X = 0.100, X = 0.125, and X = c).

When X = 0.075, the mixed proton-electron conducting ceramic according to the present example is expressed by a chemical formula, $SrZr_{0.825}Y_{0.1}Ru_{0.075}O_{3-\alpha}$. In this instance, when a sum of the molar ratios of the metals constituting the ceramic is taken as 2, the molar ratio of ruthenium is 0.075.

In accordance with Example No. 2, when X = 0.1000, the mixed proton-electron conducting ceramic is expressed by a chemical formula, $SrZr_{0.8}Y_{0.1}Ru_{0.1}O_{3-\alpha}$. In this instance, when a sum of the molar ratios of the metals constituting the ceramic is taken as 2, the molar ratio of ruthenium is 0.100.

When X = 0.125, the mixed proton-electron conducting ceramic is expressed by a chemical formula, $SrZr_{0.775}Y_{0.1}Ru_{0.125}O_{3-\alpha}$. In this instance, when a sum of the molar ratios of the metals constituting the ceramic is taken as 2, the molar ratio of ruthenium is 0.125.

In accordance with Example No. 2, the following respective powders, strontium carbonate ($SrCO_3$, 99.99% purity), zirconium oxide ($ZrO_2$, 99.9% purity), yttrium oxide ($Y_2O_3$, 99.9% purity) and ruthenium oxide (99.9% purity), were used, as starting raw material powders. And, a disk-shaped green compact was formed in the same procedures as the aforementioned example (calcination temperature: 1,350 °C, and calcination time: 10 hours) basically. Further, the green compact was pressurized by a rubber pressing method with a hydrostatic pressure (pressurizing force: 300 MPa), thereby forming a pressurized body. The pressurized body was sintered by heating it to and held it at 1,700 °C in an air atmosphere for 10 hours. Thus, a sample was formed. The thickness of the sample was 0.5 mm, and the diameter was 13 mm.

Using an X-ray diffractometer, the identification of the sample's phases was carried out. Further, with an electron microscope (SEM, magnification: 400 times, and 1,000 times), the surface observation was carried out. It was confirmed with the electron microscope (SEM) as well that the sample does not have any open pores causing mechanical gas leakage.

And, in a state that the sample was heated to 800 °C, the hydrogen permeability was measured in the same manner as described above. In this instance, no voltage is applied to the platinum layers 12. The measurement results are illustrated in Fig. 4. In Fig. 4, the ◊ marks represent the measurement results on X = 0.075. The △ marks represent the measurement results on X = 0.100. The ▽ marks represent the measurement results on X = 0.125.

As shown in Fig. 4, when the concentration of hydrogen gas supplied to the anode side was 22%, the hydrogen permeation rate was about 0.035-0.040 $ml \cdot min^{-1} \cdot cm^{-2}$. When the concentration of hydrogen gas supplied to the anode side was 5%, the hydrogen permeation rate was about 0.01-0.02 $ml \cdot min^{-1} \cdot cm^{-2}$ approximately.

Thus, in Example No. 2 as well, it was possible to provide mixed proton-electron conducting ceramic which has both proton conductivity and electron conductivity, and which can permeate hydrogen.

(Example No. 3)

As for Example No. 3, a sample, which was formed of a strontium-cerium-ruthenium-oxygen-based metallic oxide, was produced. That is, an $SrCe_{1-x}Ru_xO_{3-\alpha}$ sample was produced. In this instance, let X = 0.05, X = 0.100, and X = 0.15.

When X = 0.05, the mixed proton-electron conducting ceramic according to the present example is expressed by a chemical formula, $SrCe_{0.95}Ru_{0.05}O_{3-\alpha}$. In this instance, when a sum of the molar ratios of the metals constituting the ceramic is taken as 2, the molar ratio of ruthenium is 0.05.

When X = 0.1, the mixed proton-electron conducting ceramic according to the present example is expressed by a chemical formula, $SrCe_{0.9}Ru_{0.1}O_{3-\alpha}$. In this instance, when a sum of the molar ratios of the metals constituting the ceramic is taken as 2, the molar ratio of ruthenium is 0.10.

When X = 0.15, the mixed proton-electron conducting ceramic according to the present example is expressed by a chemical formula, $SrCe_{0.85}Ru_{0.15}O_{3-\alpha}$. In this instance, when a sum of the molar ratios of the metals constituting the ceramic is taken as 2, the molar ratio of ruthenium is 0.15.

In accordance with Example No. 3, the following respective powders, strontium carbonate ($SrCO_3$, 99.99% purity), cerium oxide ($CeO_2$, 99.9% purity) and ruthenium oxide (99.9% purity), were used, as starting raw material powders. And, a disk-shaped green compact was formed in the same procedures as the aforementioned example (calcination temperature: 1,200 °C, and calcination time: 10 hours) basically. Further, the green compact was pressurized by a rubber pressing method with a hydrostatic pressure (pressurizing force: 200 MPa), thereby forming a pressurized body. The pressurized body was sintered by heating it to and held it at 1,550-1,600 °C in an air atmosphere for 10 hours. Thus, a sample was formed. The thickness of the sample was adapted to 0.5 mm, and the diameter was adapted to 13 mm.

Using an X-ray diffractometer, the identification of the sample's phases was carried out. Further, with an electron microscope (SEM), the surface observation was carried out. It was confirmed with the electron microscope (SEM) as well that the sample does not have any open pores causing mechanical gas leakage. And, in a state that the sample was heated to 800 °C, when the hydrogen permeability was measured in the same manner as described above, hydrogen permeation was confirmed. In this instance as well, no voltage is applied to the platinum layers 12.

(Others)

In the aforementioned examples, moreover, in addition thereto, the present invention is not one which is limited to the aforementioned examples alone, but is one which can be carried out by appropriately performing modifications within a range not deviating from the gist. The modes of the invention, the examples, the phrases set forth in the drawings, the data, and even a part of them, are those which can be set forth in the claims.

INDUSTRIAL APPLICABILITY

As described above, since the mixed proton-electron conducting ceramic according to the present invention has the mixed conductivity of proton together with electron, it can be utilized for hydrogen-permeating apparatuses, such as hydrogen permeation membranes. Further, by utilizing the mixed proton-electron conductivity, it can be utilized for membrane reactor vessels, which carry out hydrogen elimination and/or hydrogen addition.

## Claims

1. A mixed proton-electron conducting ceramic being a metallic oxide having a perovskite type structure, the mixed proton-electron conducting ceramic having proton conductivity and electron conductivity and being expressed by a general formula $ABO_{3-\alpha}$, wherein $\alpha$ is a value of oxygen deficiency,
**characterized in that**
it includes as a dopant element, ruthenium (Ru) and optionally at least one member selected from the group consisting of chromium (Cr), manganese (Mn), iron (Fe), cobalt (Co) and nickel (Ni) in a proportion of 0.8 or less by molar ratio when a sum of a molar ratio of the A-site element and a molar ratio of the B-site element is taken as 2, wherein ruthenium (Ru) is included in a proportion of 0.01 or more by molar ratio.

2. The mixed proton-electron conducting ceramic as in claim 1, being **characterized in that** it further includes, as B-site element, zirconium (Zr) in a proportion of 0.005 or more by molar ratio.

3. The mixed proton-electron conducting ceramic as in claim 2, being **characterized in that** it includes as B-site element, zirconium (Zr) in a proportion of 0.005 or more and 0.99 or less by molar ratio.

4. The mixed proton-electron conducting ceramic as in claim 1, being **characterized in that** it has a composition of a chemical formula $A_{1+a}B_{1-a-b-c}B'_bB''_cO_{3-\alpha}$: wherein
the B-site element includes a B element in the chemical formula, and additionally includes a B' element and a B" element;
A: at least one member selected from the group consisting of calcium (Ca), strontium (Sr) and barium (Ba);
a satisfies a condition, $0.8 \leq (1+a)/(1-a) \leq 1.2$;
B: at least one member selected from the group consisting of cerium (Ce), zirconium (Zr) and titanium (Ti);
B': at least one member selected from the group consisting of aluminum (A1), scandium (Sc), gallium (Ga), yttrium (Y), indium (In) and a metallic element which belongs to the lanthanide series and whose atomic number is 59-71;
a range of b is 0 or more and 0.5 or less;
B": ruthenium (Ru); and
a range of c is 0.01 or more and 0.8 or less.

5. The mixed proton-electron conducting ceramic as in claim 1, being **characterized in that** it has proton conductivity and electron conductivity in a state that no voltage is applied.

## Patentansprüche

1. Proton-Elektron-leitende Mischkeramik, die ein Metalloxid mit einer Struktur vom Perowskit-Typ ist, wobei die Proton-Elektron-leitende Mischkeramik Protonenleitfähigkeit und Elektronenleitfähigkeit hat und durch eine allgemeine Formel $ABO_{3-\alpha}$, ausgedrückt wird, wobei $\alpha$ ein Sauerstoffmangelwert ist,
**dadurch gekennzeichnet, dass**
sie als ein Dotierelement Ruthenium (Ru) und optional mindestens einen aus der aus Chrom (Cr), Mangan (Mn), Eisen (Fe), Cobalt (Co) und Nickel (Ni) bestehenden Gruppe gewählten Bestandteil in einem Anteil von 0,8 oder weniger als Molverhältnis ausgedrückt enthält, wenn eine Summe eines Molverhältnisses des Elements auf dem A-Platz und eines Molverhältnisses des Elements auf dem B-Platz als 2 genommen wird, wobei Ruthenium (Ru) in einem Anteil von 0,01 oder mehr als Molverhältnis ausgedrückt enthalten ist.

2. Proton-Elektron-leitende Mischkeramik wie im Anspruch 1, die **dadurch gekennzeichnet ist, dass** sie als Element auf dem B-Platz außerdem Zirconium (Zr) in einem Anteil von 0,005 oder mehr als Molverhältnis ausgedrückt enthält.

3. Proton-Elektron-leitende Mischkeramik wie im Anspruch 2, die **dadurch gekennzeichnet ist, dass** sie als Element auf dem B-Platz Zirconium (Zr) in einem Anteil von 0,005 oder mehr und 0,99 oder weniger als Molverhältnis ausgedrückt enthält.

4. Proton-Elektron-leitende Mischkeramik wie im Anspruch 1, die **dadurch gekennzeichnet ist, dass** sie eine Zusammensetzung einer chemischen Formel $A_{1+a}B_{1-a-b-c}B'_bB''_cO_{3-\alpha}$ hat, wobei

das Element auf dem B-Platz ein B-Element in der chemischen Formel und zusätzlich ein B'-Element und ein B''-Element einschließt;

A: mindestens ein Bestandteil, der aus der Gruppe gewählt ist, die aus Calcium (Ca), Strontium (Sr) und Barium (Ba) besteht;

a eine Bedingung $0{,}8 \leq (1+a)/(1-a) \leq 1{,}2$ erfüllt;

B: mindestens ein Bestandteil, der aus der Gruppe gewählt ist, die aus Cer (Ce), Zirconium (Zr) und Titan (Ti) besteht;

B': mindestens ein Bestandteil, der aus der Gruppe gewählt ist, die aus Aluminium (Al), Scandium (Sc), Gallium (GA), Yttrium (Y), Indium (In) und einem metallischen Element besteht, das zur Lanthanoiden-Reihe gehört und dessen Atomzahl 59-71 beträgt;

ein Bereich von b 0 oder mehr und 0,5 oder weniger beträgt;

B'': Ruthenium (Ru); und

ein Bereich von c 0,01 oder mehr und 0,8 oder weniger beträgt.

**5.** Proton-Elektron-leitende Mischkeramik wie im Anspruch 1, die **dadurch gekennzeichnet ist, dass** sie in einem Zustand Protonenleitfähigkeit und Elektronenleitfähigkeit hat, in dem keine Spannung angelegt ist.

## Revendications

**1.** Céramique conductrice mixte de protons et d'électrons qui est un oxyde métallique ayant une structure de type pérovskite, la céramique conductrice mixte de protons et d'électrons présentant une conductivité protonique et une conductivité électronique et étant exprimée par une formule générale $ABO_{3-\alpha}$, où $\alpha$ est une valeur d'insuffisance en oxygène,
**caractérisée en ce qu'**elle comporte, en tant qu'élément dopant, du ruthénium (Ru) et éventuellement au moins un élément choisi dans le groupe constitué de chrome (Cr), de manganèse (Mn), de fer (Fe), de cobalt (Co) et de nickel (Ni) en une proportion inférieure ou égale à 0,8 en termes de rapport molaire lorsqu'une somme d'un rapport molaire de l'élément du site A et d'un rapport molaire de l'élément du site B est considérée comme égale à 2, où du ruthénium (Ru) est inclus en une proportion supérieure ou égale à 0,01 en termes de rapport molaire.

**2.** Céramique conductrice mixte de protons et d'électrons selon la revendication 1, étant **caractérisée en ce qu'**elle comporte en outre, en tant qu'élément du site B, du zirconium (Zr) en une proportion supérieure ou égale à 0,005 en termes de rapport molaire.

**3.** Céramique conductrice mixte de protons et d'électrons selon la revendication 2, étant **caractérisée en ce qu'**elle comporte, en tant qu'élément du site B, du zirconium (Zr) en une proportion supérieure ou égale à 0,005 et inférieure ou égale à 0,99 en termes de rapport molaire.

**4.** Céramique conductrice mixte de protons et d'électrons selon la revendication 1, étant **caractérisée en ce qu'**elle a une composition de formule chimique $A_{1+a}B_{1-a-b-c}B'_bB''_cO_{3-\alpha}$ : où
l'élément du site B comporte un élément B dans la formule chimique, et comporte en outre un élément B' et un élément B '' ;
A : au moins un élément choisi dans le groupe constitué de calcium (Ca), de strontium (Sr) et de baryum (Ba) ;
a satisfait une condition, $0{,}8 \leq (1 + a)/(1-a) \leq 1{,}2$ ; B : au moins un élément choisi dans le groupe constitué de cérium (Ce), de zirconium (Zr) et de titane (Ti) ;
B' : au moins un élément choisi dans le groupe constitué d'aluminium (Al), de scandium (Sc), de gallium (Ga), d'yttrium (Y), d'indium (In) et d'un élément métallique qui appartient aux lanthanides et dont le numéro atomique est de 59 à 71 ;
une plage de b est comprise entre 0 et 0,5, bornes incluses ;
B'' : du ruthénium (Ru) ; et
une plage de c est comprise entre 0,01 et 0,8, bornes incluses.

**5.** Céramique conductrice mixte de protons et d'électrons selon la revendication 1, étant **caractérisée en ce qu'**elle présente une conductivité protonique et une conductivité électronique lorsqu'aucune tension n'est appliquée.

## Fig.1

## Fig.2

Gas →    $H^+$    → $H_2$

$H_2$, $CO_2$, $N_2$, $H_2O$    $e^-$

## Fig.3

$H_2$ (1atm), Pt | $BaCe_{0.9-x}Y_{0.1}Ru_xO_{3-\alpha}$ | Pt,$H_2$ ($p_{H_2}$)

$BaCe_{0.9-x}Y_{0.1}Ru_xO_{3-\alpha}$
- ● x=0.075
- ■ x=0.100
- ---- Theoretical Electromotive Force

800°C

S1

Electromotive Force (EMF)/mV

log ($p_{H_2}$/atm)

## Fig.4

## Fig.5

After 3-hour Hydrogen Treatment

Before Measurement

(BaCeO₃)

Intensity

20    25    30    35    40    45    50

2 θ / degree (CuK α)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10297902 A
- EP 1029837 A2
- EP 1095914 A
- DE 4406276 A1
- JP 6305816 A
- JP 2000302550 A
- US 6037514 A
- US 6281403 B1
- EP 1452505 A1

**Non-patent literature cited in the description**

- *Solid State Ionics,* 1997, vol. 100, 45-52